# EUROPEAN PATENT SPECIFICATION

(11) **EP 0 446 241 B1**
(45) Date of publication and mention of the grant of the patent: **15.06.1994**
(21) Application number: 89912990.2
(22) Date of filing: 30.11.1989
(51) Int. Cl.: G01F 1/05

(54) **A DEVICE FOR MEASURING THE RATE OF FLOW OF A FLOWING FLUID**
SCHALTUNG ZUR MESSUNG DER DURCHFLUSSRATE EINES FLIESSENDEN MEDIUMS
DISPOSITIF DE MESURE DU DEBIT D'UN FLUIDE

(30) Priority: 01.12.1988 SE 8804353
(43) Date of publication of application: 18.09.1991
(73) Proprietor: NOREN, Anders, S-182 63 Djursholm (SE)
(72) Inventor: NOREN, Anders, S-182 63 Djursholm (SE)
(74) Representative: Nyberg, Bengt
(86) International application number: SE8900700
(87) International publication number: WO9006493

(56) References cited:
- GB-A- 1 055 609
- US-A- 918 097
- US-A- 1 911 267
- US-A- 3 426 595
- US-A- 4 195 522

## Description

The present invention relates to a device for measuring the rate of flow of a fluid in a closed line or conduit, said device comprising a rotor which is fully surrounded by the fluid and the speed of rotation of which is directly dependent on the rate of fluid flow. The rotor of a flowmeter of this kind is carried symmetrically by a shaft which extends substantially at right angles to the longitudinal axis of the conduit or line in which the fluid flows, and the rotor axis is asymmetric in relation to the median line of the flow field in a cross-section through the rotor shaft, so that as the fluid flows the rotor is subjected to a resultant torque and begins to rotate, and said device further including measuring means which are operative to determine the rotational speed of the rotor.

Flowmeters provided with a rotor or like rotating element, for instance turbine wheels, paddle wheels or gear wheels powered by a flowing fluid are known to the art. One drawback with flowmeters of this known kind is the difficulty in manufacturing such meters, particularly flowmeters provided with small bladed rotors. Furthermore, the viscosity of the fluid exerts a large retarding force which when the fluid has a high viscosity will render the flowmeter inoperative. US-A-4 195 522 describes such a flowmeter.

An object of the present invention is to provide a novel flowmeter which is of considerably simpler construction than the flowmeters known hitherto and which is capable of functioning smoothly even when the fluid concerned has a very high viscosity.

Accordingly, the invention is defined by the features set out in claim 1.

According to one preferred embodiment of the invention, the inventive rotor comprises one or more, mutually parallel circular discs mounted on one and the same shaft, a circular cylinder or a polygonal body, for instance a four-sided plate, particularly a square plate. A perforated plate and also polygonal plates can obtain a given driving force as a result of the blade effect generated by the holes and the edges of the polygonal plates respectively.

The simplicity of manufacture of an inventive rotor, particularly a rotor in the form of a planar plate, renders the flowmeter highly competitive with regard to price, in all sizes, which applies particularly to conduits or like flow-lines of large dimensions for which conventional flowmeters are manufactured in small numbers of sizes and at high tool costs. Furthermore, one and the same rotor can be used within a large volumetric-flow area, by, for instance, modifying the diameter of the flow passage with the aid of different inserts.

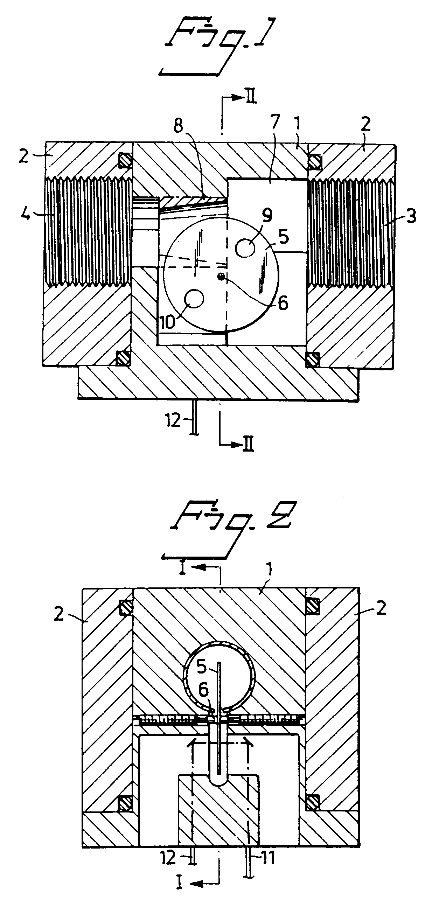

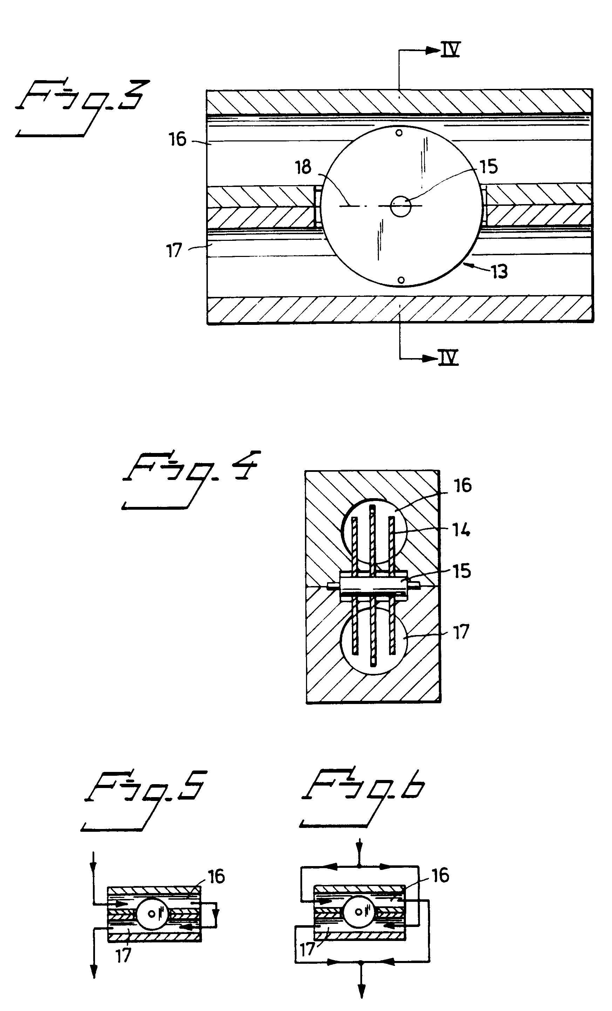

The invention will now be described in more detail with reference to the following drawings which illustrate preferred embodiments of an inventive flowmeter. Figure 1 is a longitudinal sectional view of a first embodiment, taken on the line I-I in Figure 2. Figure 2 is a cross-sectional view taken on the line II-II in Figure 1. Figure 3 is a longitudinal sectioned view of a second embodiment of the inventive device, and Figure 4 is a cross-sectional view taken on the line IV-IV in Figure 3. Figures 5 and 6 illustrate, in smaller scale, the flowmeter according to Figures 3 and 4 connected-up in a conduit or like flow-line.

In the case of the embodiment illustrated in Figures 1 and 2, the body 1 of the flowmeter is incorporated in a conduit 2 having an inlet 3 and an outlet 4. The rotor of the flowmeter consists of a circular plate 5 which is journalled symmetrically on a shaft 6, which extends perpendicularly to the longitudinal axis of the conduit 2. The plate 5 is positioned in a space 7 in the body 1 which is asymmetric to the longitudinal axis of the conduit 2. Located at the outlet of the space 7 leading to the outlet 4 of the conduit is a flow-throttling nozzle 8. The plate 5 has two holes or bores 9 and 10 which extend parallel with the shaft 6 of said plate. These bores receive light from a light-conductor, e.g. the light-conductor 11, and conduct the light to a further light-conductor, e.g. the light-conductor 12. It is thus possible to measure the speed of rotation of the plate 5 on the basis of the time which passes between those time points at which the light-conductor 12 receives the light from the light-conductor 11.

Alternatively, the speed at which the rotor or plate rotates can be measured with the aid of a light-emitter/light-receiver which operates with reflection on the rotor. Inductive and magnetic sensors can also be used for the purpose of measuring rotor speed.

The embodiment of the flowmeter illustrated in Figures 3, 4, 5 and 6 has a rotor 13 which comprises three mutually parallel and circular plates 14 journalled on one and the same rotor shaft 15. The rotor 13 is coupled so as to lie in two mutually parallel conduits 16,17 which constitute a mirror image of one another about an imaginary axis passing through the centre of the rotor 13. When fluid flows in mutually opposite directions through the conduits 16,17, as illustrated in Figures 5 and 6, the journals of the rotor 13 are relieved completely of fluid forces exerted by the rotor. In the Figure 5 illustration, the conduits 16,17 are connected in series, whereas in the Figure 6 illustration they are connected in parallel.

## Claims

1. A device for measuring the rate of flow of a fluid flowing in at least one closed conduit (2; 16,17), said device having a rotor, said rotor comprising at least one circular plate (5; 13) which is fully surrounded by the fluid and the speed of rotation of which is directly dependent on the flow rate of the fluid, and in which device the rotor (5; 13) is carried symmetrically in a body (1) by a shaft (6; 15) which extends substantially at right angles to the longitudinal axis of the conduit (2; 16,17) of said body and the rotor shaft (6) is located asymmetrically in relation to the median line of the flow field in a cross-section through the rotor shaft so that as the fluid flows the rotor (5) will obtain a resultant torque and begin to rotate, and in which measuring means (9,10,11,12) are provided for determining the rotational speed of the rotor; and in that the rotor surfaces over which the fluid flows are configured so that the torque-generating forces occur substantially as a result of the friction of the fluid against said surfaces.

2. A device according to Claim 1, **characterized** in that the measuring means for determining the rotary speed comprises at least one bore (9,10) provided in the rotor (5) and extending parallel with said axis, said bore being operative to conduct light from one light source on one side of the rotor to a light-receiver on the other side of said rotor (5).

3. A device according to Claim 1 or 2, **characterized** in that the rotor comprises one or more mutually parallel plates (5,14) mounted on one and the same shaft.

4. A device according to one of Claims 1-3, **characterized** in that the rotor surfaces over which the fluid flows are smooth.

5. A device according to Claim 1, **characterized** in that the rotor (13) is coupled so as to lie in two mutually parallel conduits (16,17) which are the mirror image of one another around a longitudinal axis (18) passing through the centre of the rotor, whereby when fluid flows in mutually opposite directions in respective conduits (16,17) the rotor journals will be completely relieved of load from the forces exerted by the fluid on the rotor.

## Patentansprüche

1. Vorrichtung zur Messung der Durchflußrate eines in wenigstens einem geschlossenen Durchgang (2; 16, 17) fließenden Fluids, wobei die Vorrichtung einen Rotor mit wenigstens einer kreisförmigen Platte (5; 13), die vollständig von dem Fluid umgeben ist und deren Rotationsgeschwindigkeit direkt von der Durchflußrate des Fluids abhängt, aufweist, und wobei in der Vorrichtung der Rotor (5; 13) symmetrisch in einem Körper (1) durch einen Schaft (6; 15) gehalten wird, der sich im wesentlichen rechtwinklig zu der Längsachse des Durchgangs (2; 16, 17) des Körpers erstreckt, und wobei der Rotorschaft (6) asymmetrisch zu der Mittellinie des Durchflußfeldes in einem Querschnitt durch den Rotorschaft angeordnet ist, so daß der Rotor (5), wenn das Fluid fließt, ein sich ergebendes Drehmoment erhält und zu rotieren beginnt, und wobei Meßeinrichtungen (9, 10, 11, 12) zur Feststellung der Rotationsgeschwindigkeit des Rotors vorgesehen sind, und wobei die Rotoroberflächen, über die das Fluid fließt, so gestaltet sind, daß die ein Drehmoment erzeugenden Kräfte im wesentlichen als Folge der Reibung des Fluids gegen die Oberflächen auftreten.

2. Vorrichtung nach Anspruch 1, **dadurch gekennzeichnet,** daß die Meßeinrichtung zur Feststellung der Rotationsgeschwindigkeit wenigstens eine Bohrung (9, 10) aufweist, die in dem Rotor (5) vorgesehen ist und sich parallel zu der Achse erstreckt, wobei die Bohrung dazu dient, Licht von einer Lichtquelle auf einer Seite des Rotors zu einem Lichtempfänger auf der anderen Seite des Rotors (5) zu leiten.

3. Vorrichtung nach Anspruch 1 oder 2, **dadurch gekennzeichnet,** daß der Rotor eine oder mehrere zueinander parallele Platten (5, 14) aufweist, die auf ein und demselben Schaft befestigt sind.

4. Vorrichtung nach einem der Ansprüche 1 bis 3, **dadurch gekennzeichnet,** daß die Rotoroberflächen, über die das Fluid fließt, glatt sind.

5. Vorrichtung nach Anspruch 1, **dadurch gekennzeichnet,** daß der Rotor (13) so gekoppelt ist, daß er in zwei zueinander parallelen Durchgängen (16, 17) liegt, die das Spiegelbild voneinander um eine Längsachse (18) sind, die durch das Zentrum des Rotors geht, wobei die Rotorlager vollständig von der Last durch die von dem Fluid auf den Rotor ausgeübten Kräfte entlastet werden, wenn das Fluid in zueinander entgegengesetzten Richtungen in jeweiligen Durchgängen (16, 17) fließt.

## Revendications

1. Dispositif de mesure de débit d'un fluide s'écoulant dans au moins un conduit fermé (2 ; 16, 17), ledit dispositif comportant un rotor, ledit rotor comprenant au moins une plaque circulaire (5 ; 13) qui est complètement entourée par le fluide et dont la vitesse de rotation est directement fonction du débit du fluide, et dans lequel dispositif le rotor (5 ; 13) est supporté symétriquement dans un corps (1) par un arbre (6 ; 15) qui s'étend sensiblement à angle droit par rapport à l'axe longitudinal du conduit (2 ; 16, 17) dudit corps, et l'arbre de rotor (6) est situé dans une relation asymétrique par rapport à la ligne médiane du champ d'écoulement, suivant une coupe passant par l'arbre de rotor, de sorte que, lorsque le fluide s'écoule, le rotor (5) sera soumis à un couple résultant et commencera à tourner, et dans lequel des moyens de mesure (9, 10, 11, 12) sont prévus pour déterminer la vitesse de rotation du rotor ; et dans lequel les surfaces de rotor sur lesquelles le fluide s'écoule sont conformées de telle manière que des forces produisant un couple apparaissent sensiblement comme résultat du frottement du fluide contre lesdites surfaces.

2. Dispositif selon la revendication 1, caractérisé en ce que les moyens de mesure pour déterminer la vitesse de rotation comprennent au moins un perçage (9, 10) prévu dans le rotor (5) et s'étendant parallèlement audit axe, ledit perçage servant à conduire de la lumière depuis une source de lumière située d'un côté du rotor jusqu'à un récepteur de lumière situé de l'autre côté dudit rotor (5).

3. Dispositif selon la revendication 1 ou 2, caractérisé en ce que le rotor comprends une ou plusieurs plaques (5, 14) mutuellement parallèles montées sur un seul et même arbre.

4. Dispositif selon l'une des revendications 1 à 3, caractérisé en ce que les surfaces de rotor sur lesquelles le fluide s'écoule sont lisses.

5. Dispositif selon la revendication 1, caractérisé en ce que le rotor (13) est accouplé de manière à se trouver dans deux conduits (16, 17) mutuellement parallèles qui sont l'image spéculaire l'un de l'autre par rapport à un axe longitudinal (18) passant par le centre du rotor, ce par quoi, lorsque le fluide s'écoule dans des sens mutuellement opposés dans les conduits (16, 17) respectifs, les tourillons de rotor seront complètement libérés de la charge provenant des forces exercées par le fluide sur le rotor.
